# EUROPÄISCHE PATENTSCHRIFT

(11) **EP 4 069 588 B1**
(45) Veröffentlichungstag und Bekanntmachung des Hinweises auf die Patenterteilung: **04.09.2024**
(21) Anmeldenummer: 20817265.0
(22) Anmeldetag: 30.11.2020
(51) Int. Cl.: B64D 11/06

(54) **SITZSCHIENENBAUGRUPPE ZUR BEFESTIGUNG EINER SITZBAUGRUPPE IN EINEM FAHRZEUG, VERWENDUNG EINER SOLCHEN SITZSCHIENENBAUGRUPPE IN EINEM LUFTFAHRZEUG UND VERFAHREN ZUR HERSTELLUNG EINER SITZSCHIENENBAUGRUPPE**
SEAT RAIL ASSEMBLY FOR FASTENING A SEAT ASSEMBLY IN A VEHICLE, USE OF SUCH SEAT RAIL ASSEMBLY IN AN AIRCRAFT AND METHOD FOR MANUFACTURING A SEAT RAIL ASSEMBLY
ASSEMBLAGE DE RAIL DE SIÈGE POUR FIXER UN ASSEMBLAGE DE SIÈGE DANS UN VÉHICULE, UTILISATION DE TEL ASSEMBLAGE DE RAIL DE SIÈGE DANS UN AVION ET PROCÉDÉ DE FABRICATION D'UN ASSEMBLAGE DE RAIL DE SIÈGE

(30) Priorität: 06.12.2019 DE 102019133362
(43) Veröffentlichungstag der Anmeldung: 12.10.2022
(73) Patentinhaber: Airbus Operations GmbH, 21129 Hamburg (DE)
(72) Erfinder: WERNER, Sven, 21129 Hamburg (DE); SCHWING, Bernd, 21129 Hamburg (DE); FANGMEIER, Armin, 21129 Hamburg (DE)
(74) Vertreter: LKGLOBAL Lorenz & Kopf Patentanwalt Attorney at Law PartG mbB
(86) Internationale Anmeldenummer: PCT/EP2020/083992
(87) Internationale Veröffentlichungsnummer: WO 2021/110611

(56) Entgegenhaltungen:
- EP-A1- 3 020 628
- EP-B1- 3 020 628
- DE-A1- 102015 100 189
- DE-A1- 102019 109 149
- FR-A1- 2 864 940
- US-A1- 2006 038 071

## Beschreibung

### Gebiet der Erfindung

Die vorliegende Erfindung betrifft Sitzschienen zur Befestigung von Sitzen in einem Fahrzeug. Insbesondere betrifft die Erfindung eine Sitzschienenbaugruppe zur Befestigung einer Sitzbaugruppe in einem Fahrzeug, die Verwendung einer solchen Sitzschienenbaugruppe in einem Luftfahrzeug sowie ein Verfahren zur Herstellung einer Sitzschienenbaugruppe.

### Hintergrund der Erfindung

Sitzschienen werden in Fahrzeugen zur Befestigung von Sitzen, insbesondere Passagiersitzen, verwendet. Dabei sind die Sitzschienen in der Regel in eine Bodenstruktur des Fahrzeugs eingelassen bzw. in diese integriert. Die Sitzschienen sind meist in einer Längsrichtung des Fahrzeugs orientiert. In einer Sitzschiene können mehrere hintereinander angeordnete Sitzbaugruppen befestigt werden und je nach Bedarf in der Längsrichtung entlang der Sitzschiene verschoben werden, um somit beispielsweise den Sitzabstand zwischen hintereinander angeordneten Sitzbaugruppen einzustellen. Sitzschienen werden auf verschiedene Weise in der Bodenstruktur des Fahrzeugs befestigt, wobei unter anderem die mechanische Integrität eine Rolle spielt. Zum Beispiel müssen Korrosionseigenschaften sowie die Widerstandsfähigkeit der mechanischen Befestigung der Sitzschiene in der Bodenstruktur, insbesondere auch bei Crash-Lasten, bestimmte Anforderungen erfüllen.

Die DE 10 2018 108 190 A1 beschreibt beispielsweise ein Befestigungssystem für Passagiersitze in einer Kabine eines Fahrzeugs, wobei das Befestigungssystem zwei oder mehrere in oder an einem Fußboden der Kabine integrierbare Führungsschienen und mehrere mit den Führungsschienen in Eingriff bringbare Schlitten aufweist, welche einen Flansch zum Verbinden mit einem Passagiersitz umfassen, um den betreffenden Passagiersitz an einer Führungsschiene zu haltern.

Die DE 10 2007 001 806 A1 beschreibt eine Montageschiene für die Montage von Einbauten in einem Luftfahrzeug mit einer Beschichtung aus einem Beschichtungsmaterial, wobei der Reibungskoeffizient zwischen dem Beschichtungsmaterial und einem Material eines zu montierenden Elementes geringer ist als der Reibungskoeffizient zwischen einem Material, aus dem die unbeschichtete Montageschiene besteht, und einem Material eines zu montierenden Elementes.

FR 2 864 940 A1 beschreibt eine Sitzschiene mit einem oberen Gleitteil aus Metall, z. B. Titan, wobei die Sitzschiene auf einer Ebene eines Bodens eines Flugzeugs angeordnet ist. Ein unteres Trägerteil ist in einem durch die Bodenplatte und einen Querträger begrenzten Raum angeordnet. Das Trägerteil besteht aus Verbundmaterialien, z. B. Kohlefasern, die aus thermoplastischem oder duroplastischem Harz gebildet sind, und umfasst eine Basis und einen Vorsprungsteil, der sich senkrecht zu der Basis erstreckt.

EP 3 020 628 A1 beschreibt eine Sitzschiene zum Stützen von Sitzen in einem Flugzeug. Die Sitzschiene umfasst einen Stützabschnitt zur Verbindung mit dem Kabinenboden und einen Sitzaufnahmeabschnitt mit einer Nut zum Aufnehmen der Endabschnitte von Verbindungselementen, die mit dem Stützrahmen eines Sitzes gekoppelt sind. Der Stützabschnitt umfasst eine Profilanordnung aus einem faserverstärkten Polymer, vorzugsweise einem kohlefaserverstärkten Polymer, mit einem zentralen Hauptabschnitt und Flanschen, die sich von dem Hauptabschnitt nach außen und senkrecht zu diesem erstrecken, um eine Stützfläche für die Sitzschiene zu bilden. Der Hauptabschnitt umfasst einen Schlitz, der zumindest an seinem von den Flanschen entfernten Ende offen ist. Mindestens ein Metallelement, das die Nut zum Aufnehmen der Endabschnitte der Verbindungselemente umfasst, weist einen Schenkel auf, der in den Schlitz des Hauptabschnitts eingeführt und dann befestigt wird. Die Sitzschiene kann in einem kontinuierlichen Prozess hergestellt werden.

US 2006/038071 A1 beschreibt eine Sitzbefestigungsschiene für ein Passagierflugzeug. Die Sitzbefestigungsschiene umfasst eine Basis, die durch einen Steg mit einer Krone verbunden ist. Die Krone umfasst zwei Stützflansche, die seitlich in entgegengesetzten Richtungen von einer Verstärkungszone vorstehen, die sich an den Steg anschließt. Es ist eine Sitzbefestigungsnut vorgesehen, die sich in eine Längsrichtung erstreckt. Auf den Stützflanschen können Bodenplattenelemente abgestützt werden. Die obere Fläche der Verstärkungszone steht vorzugsweise nicht über die oberen Flächen der Stützflansche vor, sondern ist stattdessen zumindest im Wesentlichen bündig und eben damit. Der einzelne horizontale Basisflansch, der die Basis bildet, der einzelne vertikale Steg und die Stützflansche bilden vorzugsweise ein allgemein I-förmiges Querschnittsprofil. Die Verstärkungszone kann eine hohle untere Verstärkungsstruktur mit dreieckigem Querschnitt umfassen, die sich zur Oberseite des Stegs hin verjüngt. Großflächige Bodenplatten können die Schiene seitlich durchgehend überspannen und unabhängig vom Abstand zwischen den Schienen angeordnet werden.

### Zusammenfassung der Erfindung

Es ist eine Aufgabe der Erfindung, die Korrosionsbeständigkeit einer Sitzschienenbaugruppe in einem Fahrzeug zu verbessern bei gleichzeitiger Berücksichtigung von Gewichtsanforderungen.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem Aspekt der Erfindung ist eine Sitzschienenbaugruppe zur Befestigung einer Sitzbaugruppe in einem Fahrzeug angegeben. Die Sitzschienenbaugruppe weist eine Sitzschiene zur Befestigung der Sitzbaugruppe auf, wobei die Sitzschiene ein metallisches Material aufweist. Die Sitzschienenbaugruppe weist ferner ein Befestigungsprofil auf, welches zur Aufnahme der Sitzschiene ausgeführt ist, wobei das Befestigungsprofil einen Kunststoff aufweist. Das Befestigungsprofil bildet einen Aufnahmebereich, der dazu ausgeführt ist, die Sitzschiene aufzunehmen. Die Sitzschiene weist eine Sitzschienenkrone auf, welche in dem Aufnahmebereich des Befestigungsprofils derart angeordnet ist, dass ein Wandabschnitt des Befestigungsprofils die Sitzschienenkrone zumindest teilweise umgibt, wobei der Aufnahmebereich durch zwei seitliche Begrenzungswände, eine untere Begrenzungswand und eine obere Begrenzungswand definiert ist, und wobei die obere Begrenzungswand eine Öffnung aufweist, so dass der Aufnahmebereich in eine vertikale Richtung geöffnet ist.

Mit einer solchen Sitzschienenbaugruppe ist es möglich, bei vergleichsweise geringem Materialeinsatz eine Sitzschienenbefestigung mit ausreichender Festigkeit bereitzustellen, wobei aufgrund der Auswahl einer bestimmten Materialkombination für die Sitzschiene und das Befestigungsprofil die Korrosionsbeständigkeit gegenüber bestehenden Systemen verbessert werden kann. Zudem kann eine vergleichsweise einfache Fertigung der Sitzschienenbaugruppe, beispielsweise unter Verwendung eines thermischen Umformverfahrens, bereitgestellt werden, wobei die Fertigung für die Serienproduktion geeignet ist.

Die Sitzschienenbaugruppe kann in einer Bodenstruktur des Fahrzeugs angeordnet sein, beispielsweise zwischen zwei Bodenplatten, die im Fahrzeug integriert sind. Das Befestigungsprofil kann dabei eine Verbindung der Sitzschiene zu Strukturelementen wie einem Bodengitter (sog. "floor grid") herstellen, um die Sitzschienenbaugruppe innerhalb einer Fahrzeugprimärstruktur zu befestigen. Dabei kann vorgesehen sein, dass die metallische Sitzschiene nicht mit Fahrzeugprimärstrukturelementen in direkten Kontakt kommt, sondern quasi durch das Kunststoff umfassende Befestigungsprofil gegenüber der Primärstruktur des Fahrzeugs abgeschirmt ist. Dies wird dadurch erreicht, dass der Wandabschnitt des Befestigungsprofils die Sitzschiene, insbesondere der Sitzschienenkrone, zumindest teilweise umgibt. Der Ausdruck "teilweise umgeben" kann dabei so verstanden werden, dass zumindest drei unterschiedliche Außenflächen der Sitzschiene, insbesondere drei unterschiedlich orientierte Außenflächen der Sitzschiene, dem Wandabschnitt des Befestigungsprofils zugewandt sind. Beispielsweise sind zwei gegenüberliegende horizontale Außenflächen der Sitzschienenkrone sowie eine dazwischenliegende vertikale Außenfläche der Sitzschienenkrone jeweils einer Begrenzungswand des Wandabschnitts des Befestigungsprofils zugewandt. Dieser Zusammenhang wird in der Figurenbeschreibung noch genauer erläutert werden.

Die Sitzschiene kann die Sitzschienenkrone aufweisen oder aus dieser bestehen. In einem Beispiel bildet die Sitzschienenkrone also die Sitzschiene, die somit vollständig innerhalb des Aufnahmebereichs des Befestigungsprofils angeordnet ist. Der Aufnahmebereich kann durch den Wandabschnitt bzw. die Begrenzungswände des Befestigungsprofils gebildet sein. Dabei kann der Wandabschnitt oder das Befestigungsprofil selbst unter Verwendung von zwei Teilprofilen gebildet sein, die somit zusammen die Begrenzungswände für den Aufnahmebereich bilden.

Die Sitzschienenkrone weist ein metallisches Material auf, beispielsweise ein Material, welches auf Titan, Aluminium oder Stahl basiert. Dabei kann aufgrund der Korrosionsbeständigkeit ein Titanmaterial oder ein titanbasiertes Material bevorzugt sein. Es kann auch ein korrosionsfester Stahl (sog. "CRES" - corrosion resistant steel) verwendet werden.

Die Sitzschiene kann aus dem metallischen Material bestehen, so dass die Sitzschiene ausschließlich aus diesem Material gebildet wird. Die Sitzschienenkrone kann im Querschnitt im Wesentlichen eine rechteckige Form aufweisen, wobei eine Vertiefung in der Sitzschienenkrone vorgesehen ist, die zur Aufnahme bzw. Befestigung der Sitzbaugruppe, beispielsweise über ein Verbindungselement (sog. Stud), ausgeführt ist.

Das Befestigungsprofil weist einen Kunststoff auf, beispielsweise ein thermoplastisches Material oder ein duroplastisches Material. Dabei kann vorgesehen sein, dass der Kunststoff bei erhöhten Temperaturen, das heißt bei einer Umformtemperatur, umgeformt werden kann, so dass das Befestigungsprofil durch ein solches Umformverfahren in seine endgültige Form gebracht wird, in welcher der Wandabschnitt des Befestigungsprofils die Sitzschienenkrone zumindest teilweise umgibt.

Sowohl das Befestigungsprofil als auch die Sitzschiene können in einem Querschnitt eine bestimmte Profilform aufweisen. Es sei angemerkt, dass sich die geometrischen Beschreibungen der Sitzschienenbaugruppe hierin auf eine solche Querschnittsansicht beziehen können.

Gemäß einer Ausführungsform ist der die Sitzschienenkrone zumindest teilweise umgebende Wandabschnitt durch einen Umformprozess bei einer Umformtemperatur hergestellt.

Wie bereits angedeutet, weist das Befestigungsprofil und insbesondere der Wandabschnitt einen Kunststoff auf, welcher bei einer Umformtemperatur umgeformt werden kann. Vorliegend kann vorgesehen sein, dass ein Teil des Wandabschnittes, beispielsweise zwei obere Begrenzungswände, derart geformt werden, dass eine obere Außenfläche der Sitzschienenkrone durch diese beiden oberen Begrenzungswände abgedeckt ist, wobei die beiden oberen Begrenzungswände nach der Umformung gemeinsam eine obere, horizontale Begrenzungswand bilden. Damit kann die Sitzschienenkrone im Wesentlichen an sämtlichen Außenflächen von dem Wandabschnitt des Befestigungsprofils umgeben sein, wobei eine Öffnung im Wandabschnitt, das heißt der oberen, horizontalen Begrenzungswand verbleibt, um dadurch die Befestigung der Sitzbaugruppe in der Sitzschienenkrone zu ermöglichen.

Die Umformung kann also durch Umklappen der beiden oberen Begrenzungswände erfolgen, beispielsweise in einem separat dafür vorgesehenen Fertigungsschritt, der sich einem Schritt des Einsetzens der Sitzschiene in den Aufnahmebereich des Befestigungsprofils anschließt. Der Vorteil der dadurch entstehenden Konfiguration ist, dass die Sitzschiene bzw. die Sitzschienenkrone fest in das Befestigungsprofil integriert werden kann und somit die erforderliche mechanische Festigkeit mit vergleichsweise geringem Materialaufwand sowohl für die Sitzschiene selbst als auch für das Befestigungsprofil bereitgestellt wird.

Gemäß einer Ausführungsform ist das metallische Material der Sitzschiene ein Titanwerkstoff.

Dadurch wird eine hohe Korrosionsbeständigkeit bereitgestellt. Die höheren Materialkosten von Titan gegenüber Aluminium oder Stahl werden durch die hierin beschriebene geometrische Ausgestaltung der Sitzschiene und des Befestigungsprofils kompensiert, indem insbesondere weniger Material für die Sitzschiene an sich aufgewendet wird. Mit anderen Worten kann durch die erfindungsgemäße Sitzschienenbaugruppe der Materialeinsatz von Titan für die Sitzschiene reduziert werden, was insbesondere auf die hierin beschriebene Kombination aus Kunststoff und Titan sowie die geometrische Ausgestaltung der Sitzschienenbaugruppe zurückzuführen ist. Dadurch ergibt sich wiederum ein Kostenvorteil für den Materialeinsatz gegenüber bekannten Sitzschienensystemen. Titan bietet insbesondere auch die erforderliche Festigkeit, die für die Befestigung der Sitzbaugruppe an der Sitzschienenbaugruppe von großer Bedeutung ist. Zudem können Inspektionsintervalle durch die Verwendung von Titan verlängert werden.

Gemäß einer Ausführungsform weist das Befestigungsprofil einen faserverstärkten Kunststoff auf.

Bei dem faserverstärkten Kunststoff kann es sich zum Beispiel um kohlenstofffaserverstärkten Kunststoff, glasfaserverstärkten Kunststoff oder aramidfaserverstärkten Kunststoff handeln. Vorzugsweise handelt es sich hier um kohlenstofffaserverstärkten Kunststoff. Dabei können die jeweiligen Fasern in einer Kunststoffmatrix aus thermoplastischem Material oder aber auch duroplastischem Material angeordnet sein.

Bei der Herstellung des Befestigungsprofils können auch vorimprägnierte Halbzeuge (Prepregs) zum Einsatz kommen, welche den die Sitzschienenkrone zumindest teilweise umgebenden Wandabschnitt bilden, der anschließend ausgehärtet werden kann. Es ist aber auch möglich, einen oder mehrere faserverstärkte Kunststoffrohlinge für das Befestigungsprofil zu verwenden, die bei der Umformtemperatur erweicht werden, um sie dann in ihre Form zu bringen, insbesondere um die oberen Begrenzungswände des Wandabschnittes auf die obere Außenfläche der Sitzschienenkrone quasi umzuklappen.

Gemäß einer Ausführungsform ist die Sitzschienenkrone durch mindestens zwei horizontale Begrenzungswände und eine vertikale Begrenzungswand des Wandabschnitts eingefasst.

Dabei können die Begriffe "horizontal" und "vertikal" auf einen Querschnitt der Sitzschienenkrone und des Befestigungsprofils in ihrem Einbauzustand im Fahrzeug bezogen sein. Dasselbe kann für die Begriffe "obere Begrenzungswand" bzw. "untere Begrenzungswand" gelten. Dies wird in der Figurenbeschreibung noch deutlicher ersichtlich.

Die horizontalen Begrenzungswände bilden auch einen oberen bzw. unteren Abschluss des Aufnahmebereichs, in dem die Sitzschienenkrone teilweise umschlossen ist. Die horizontalen Begrenzungswände können damit horizontalen Außenflächen der Sitzschienenkrone zugewandt sein. Die vertikale Begrenzungswand kann zwischen den beiden horizontalen Begrenzungswänden angeordnet sein und/oder senkrecht bezüglich der beiden horizontalen Begrenzungswände ausgerichtet sein.

Gemäß einer Ausführungsform ist der Aufnahmebereich im Wesentlichen quaderförmig ausgebildet und die Sitzschiene derart angeordnet, dass sie vollständig innerhalb des quaderförmigen Aufnahmebereichs angeordnet ist.

Es sei angemerkt, dass der Aufnahmebereich aufgrund seiner dreidimensionalen Ausführung quaderförmig ist und in seinem Querschnitt daher rechteckig ist. Die Begrenzungswände des Aufnahmebereichs, welche gleichzeitig auch die Begrenzungswände des Befestigungsprofils sind, sind damit jeweils Außenflächen der Sitzschiene bzw. Sitzschienenkrone zugewandt. "Vollständig innerhalb des Aufnahmebereichs" kann bedeuten, dass die Sitzschiene über keinen der den Wandabschnitt bildenden Begrenzungswände hinausragt. Es kann vorgesehen sein, dass kleine Vorsprünge lediglich minimal über die obere Begrenzungswand hinausragen.

Die Begrenzungswände können Teile des Wandabschnitts des Befestigungsprofils sein, wobei die Begrenzungswände so angeordnet sind, dass sie die Sitzschiene bzw. die Sitzschienenkrone zumindest teilweise umgeben oder umschließen, jedoch ein Zugangsbereich in der oberen Begrenzungswand offenbleibt, um ein Verbindungselement zum Befestigen der Sitzbaugruppe an der Sitzschienenbaugruppe in die Sitzschienenkrone einzusetzen.

Gemäß einer Ausführungsform weist die Sitzschienenkrone eine Aussparung auf, die dazu ausgeführt ist, ein Verbindungselement zum Befestigen einer Sitzbaugruppe an der Sitzschienenbaugruppe aufzunehmen.

Die Sitzschienenkrone kann eine sog Douglas-Krone ("Douglas Crown") sein. Die Breite der Aussparung kann im Querschnitt betrachtet in vertikale Richtung variieren. Insbesondere kann die Aussparung an einer oberen Außenfläche der Sitzschienenkrone eine geringere Breite aufweisen als in einem Kernbereich der Sitzschienenkrone, ähnlich einer Hinterschneidung. Die Breite der Aussparung kann in einer Längsrichtung der Sitzschiene ebenfalls variieren, insbesondere im Bereich der oberen Außenfläche.

Gemäß einer Ausführungsform ist die Aussparung der Sitzschienenkrone in Form einer Vertiefung in die vertikale Richtung ausgebildet, so dass die Aussparung der Sitzschienenkrone in Richtung der Öffnung der oberen Begrenzungswand des Aufnahmebereichs zeigt, wenn die Sitzschiene in den Aufnahmebereich eingesetzt ist.

Damit wird gewährleistet, dass ein Verbindungselement, dass die Sitzbaugruppe an der Sitzschienenbaugruppe befestigen soll, durch die Öffnung der oberen Begrenzungswand des Wandabschnitts hindurch in die Aussparung eingreifen kann. Es kann vorgesehen sein, dass ein Kontakt zwischen der oberen Begrenzungswand des Wandabschnitts und dem Verbindungselement unterbunden wird.

Wenn die Sitzschiene in den Aufnahmebereich eingesetzt ist, können sämtliche Begrenzungswände des Wandabschnitts direkt an der Sitzschiene anliegen. Dabei kann das beispielsweise thermoplastische Material der Begrenzungswände mit der Sitzschiene bzw. Sitzschienenkrone konsolidiert werden, was bedeutet, dass der Wandabschnitt des Befestigungsprofils durch den Umformprozess bei Raumtemperatur oder bei erhöhter Temperatur über der Raumtemperatur mit der Sitzschiene bzw. Sitzschienenkrone mechanisch verbunden wird. Ferner kann ein Formschluss zwischen der Sitzschiene bzw. Sitzschienenkrone und den Begrenzungswänden vorgesehen sein, was eine Fixierung der Sitzschiene bzw. Sitzschienenkrone in dem Befestigungsprofil bewirkt. Ein solcher Formschluss kann beispielsweise durch seitliches Bördeln der Sitzschienenkrone an den angrenzenden seitlichen Begrenzungswänden erfolgen. Es kann jedoch auch vorgesehen sein, dass ein Bindemittel, beispielsweise ein Kleber oder ein anderes Material, zwischen den Begrenzungswänden und der Sitzschiene angeordnet ist, um einen festen Halt der Sitzschiene innerhalb des durch die Begrenzungswände definierten Aufnahmebereichs sicherzustellen.

Gemäß einer Ausführungsform weist die Sitzschienenkrone im Bereich der Aussparung Vorsprünge auf, welche sich in die vertikale Richtung erstrecken, wobei die Vorsprünge mit einem Rand der Öffnung der oberen Begrenzungswand des Aufnahmebereichs abschließen, wenn die Sitzschiene in den Aufnahmebereich eingesetzt ist.

Damit wird verhindert, dass es zu einem Kontakt zwischen dem Verbindungselement, welches die Sitzbaugruppe in der Sitzschienenbaugruppe befestigt, und der oberen Begrenzungswand des Wandabschnitts kommt. Da das Befestigungsprofil und damit der Wandabschnitt und auch die obere Begrenzungswand ein Kunststoffmaterial, insbesondere einen faserverstärkten Kunststoff aufweisen, könnte ein Kontakt des Verbindungselements mit der Begrenzungswand eine Abnutzung des ggf. weicheren Kunststoffmaterials bewirken, die jedoch durch die Anordnung der Vorsprünge an der Sitzschiene vermieden werden kann. Die Vorsprünge können somit zwischen dem in die Sitzschienenkrone aufzunehmenden Verbindungselement und der oberen Begrenzungswand angeordnet sein. Die Vorsprünge ragen somit geringfügig über die obere Außenfläche der Sitzschienenkrone hinaus und können das gleiche metallische Material wie die Sitzschienenkrone aufweisen.

Gemäß einem weiteren Aspekt der Erfindung ist eine Verwendung einer Sitzschienenbaugruppe, wie sie zuvor und nachfolgend beschrieben ist, in einem Luftfahrzeug angegeben.

Das Luftfahrzeug ist beispielsweise ein Passagier- oder Transportflugzeug, wobei die Sitzschienenbaugruppe einen Teil einer Bodenstruktur des Passagier- oder Transportflugzeugs bilden kann. Es ist möglich, die erfindungsgemäße Sitzschienenbaugruppe auch im Schiffsbau oder allgemein im Transportwesen, beispielsweise in Bussen oder Automobilen, einzusetzen.

Gemäß einem weiteren Aspekt der Erfindung ist ein Verfahren zur Herstellung einer Sitzschienenbaugruppe angegeben. In einem Schritt des Verfahrens erfolgt ein Bereitstellen einer Sitzschiene mit einer Sitzschienenkrone, wobei die Sitzschiene ein metallisches Material aufweist. In einem weiteren Schritt erfolgt ein Bereitstellen eines Befestigungsprofils mit einem Aufnahmebereich und einem Wandabschnitt, wobei das Befestigungsprofil einen Kunststoff aufweist. In einem weiteren Schritt erfolgt ein Einsetzen der Sitzschiene in den Aufnahmebereich des Befestigungsprofils. In einem weiteren Schritt erfolgt ein Erwärmen des Befestigungsprofils auf eine Umformtemperatur, die insbesondere geeignet ist, um einen faserverstärkten Kunststoff zu erweichen. Die Umformtemperatur kann eine Raumtemperatur von ca. 20 °C sein. Die Umformtemperatur kann aber auch darüber liegen, zum Beispiel bei über 50 °C, bei über 100°C oder bei über 200 °C. In einem weiteren Schritt erfolgt ein Umformen des Befestigungsprofils, sodass der Wandabschnitt des Befestigungsprofils die Sitzschienenkrone der Sitzschiene zumindest teilweise umgibt, wobei der Aufnahmebereich durch zwei seitliche Begrenzungswände, eine untere Begrenzungswand und eine obere Begrenzungswand definiert ist, und wobei die obere Begrenzungswand eine Öffnung aufweist, so dass der Aufnahmebereich in eine vertikale Richtung geöffnet ist.

Diese Schritte des Verfahrens können in der angegebenen oder in einer beliebigen Reihenfolge durchgeführt werden.

### Kurze Beschreibung der Figuren

- Fig. 1: zeigt eine Sitzschiene gemäß einem Ausführungsbeispiel der Erfindung.
- Fig. 2: zeigt ein Befestigungsprofil gemäß einem Ausführungsbeispiel der Erfindung.
- Fig. 3: zeigt die Sitzschiene der Figur 1, eingesetzt in das Befestigungsprofil der Figur 2, gemäß einem Ausführungsbeispiel der Erfindung.
- Fig. 4: zeigt eine Sitzschienenbaugruppe gemäß einem Ausführungsbeispiel der Erfindung.
- Fig. 5: zeigt eine Sitzschienenbaugruppe gemäß einem weiteren Ausführungsbeispiel der Erfindung.
- Fig. 6: zeigt ein Luftfahrzeug mit einer Sitzschienenbaugruppe gemäß einem Ausführungsbeispiel der Erfindung.
- Fig. 7: zeigt ein Flussdiagramm für ein Verfahren zur Herstellung einer Sitzschienenbaugruppe gemäß einem Ausführungsbeispiel der Erfindung.

### Detaillierte Beschreibung beispielhafter Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

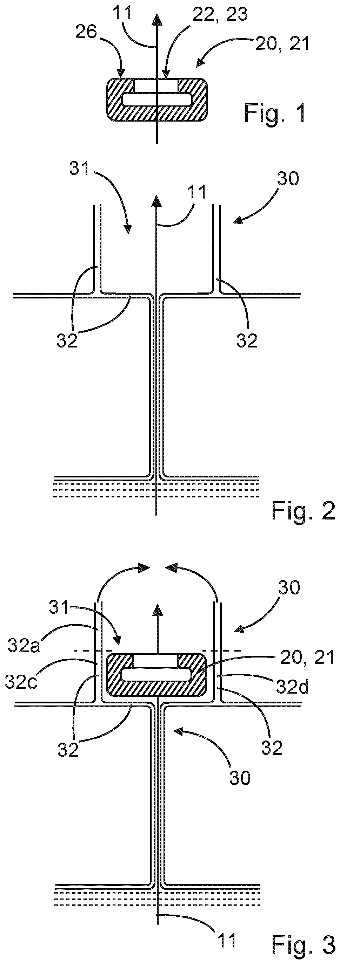

Fig. 1 zeigt eine metallische Sitzschiene 20, insbesondere eine Sitzschienenkrone 21, welche auch als sog. Douglas-Krone bezeichnet wird. Die Sitzschienenkrone 21 weist eine Aussparung 22 in Form einer Vertiefung 23 auf, die sich ausgehend von einer oberen Außenfläche 26 der Sitzschienenkrone 21 entlang einer vertikalen Richtung 11 in die Sitzschienenkrone 21 hinein erstreckt. Die Figur 1 zeigt eine Querschnittsansicht der Sitzschiene 20 bzw. Sitzschienenkrone 21, welche ein im Wesentlichen rechteckiges Querschnittsprofil aufweist. Die Sitzschiene 20 bzw. Sitzschienenkrone 21 kann ein langgestrecktes Bauteil aus einem Titanwerkstoff sein, das sich in die Zeichenebene der Fig. 1 hinein erstreckt.

Fig. 2 zeigt ein Befestigungsprofil 30 aus einem faserverstärkten Kunststoffmaterial, wobei es sich auch hier um einen Querschnitt des Profils handelt. Wie in der Figur 2 zu erkennen, können zur Bildung des Profils zwei im Wesentlichen U-förmige Profilquerschnitte nebeneinander angeordnet sein, die zusammen das Befestigungsprofil 30 bilden. Die U-förmigen Profilquerschnitte weisen jeweils einen seitlich abstehenden Flansch in Form von Begrenzungswänden auf, die seitlich aus den U-förmigen Profilquerschnitten herausragen (in Fig. 2 die nach oben herausragenden Wände). Diese Begrenzungswände bilden einen Teil eines Wandabschnitts 32 des Befestigungsprofils 30, wobei der Wandabschnitt 32 einschließlich seitlicher, vertikaler Begrenzungswände und einer unteren, horizontalen Begrenzungswand einen Aufnahmebereich 31 bilden. Der Wandabschnitt 32 weist dabei eine Gabelform auf.

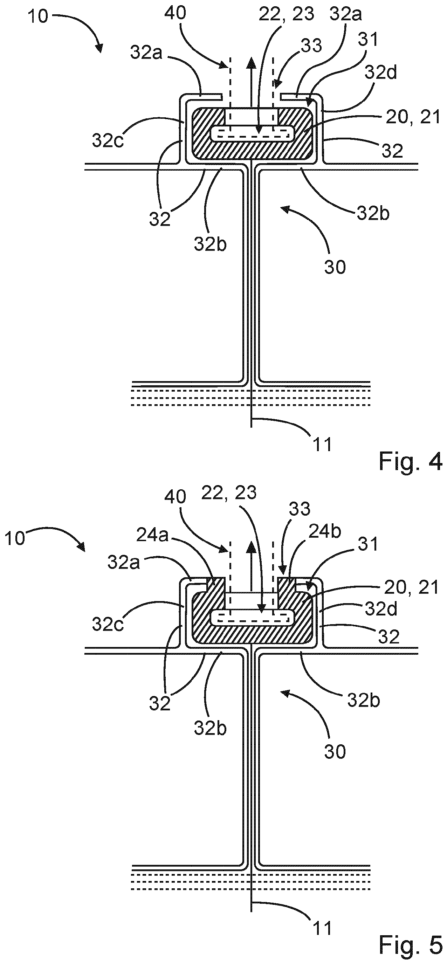

Wie in der Querschnittsansicht von Figur 3 zu erkennen, ist die Sitzschiene 20, welche im vorliegenden Fall vollständig durch die Sitzschienenkrone 21 gebildet wird, in den Aufnahmebereich 31 des Befestigungsprofils 30 der Figur 2 eingesetzt. Dabei sind weiterhin u.a. die beiden seitlichen, vertikalen Begrenzungswände 32c und 32d zu erkennen. Diese seitlichen, vertikalen Begrenzungswände 32c und 32d weisen verlängerte Bereiche der Begrenzungswände 32a auf, welche in einem Umformprozess umgeformt, insbesondere in Richtung der dargestellten Pfeile umgebogen oder umgeklappt werden, so dass diese verlängerten Bereiche der Begrenzungswände 32a gemeinsam eine obere, horizontale Begrenzungswand 32a des Wandabschnitts 32 und damit des Aufnahmebereichs 31 bilden, wie dies in den Figuren 4 und 5 dargestellt ist.

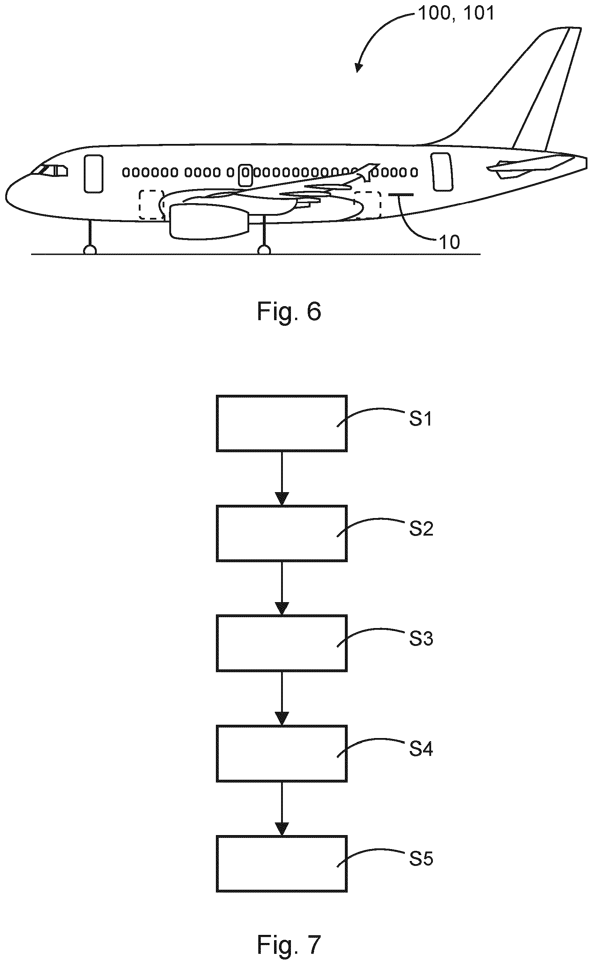

Die Figuren 4 und 5 zeigen Querschnitte zweier alternativer Beispiele einer Sitzschienenbaugruppe 10, wobei die Sitzschienenbaugruppe 10 jeweils die Sitzschiene 20 und das Befestigungsprofil 30 aufweist. Die Sitzschienenbaugruppe 10 ist zur Befestigung einer in den Figuren 4 und 5 nicht dargestellten Sitzbaugruppe in einem Fahrzeug 100 (Fig. 6) ausgeführt, wobei die Befestigung über ein durch gestrichelte Linien dargestelltes Verbindungselement 40 erfolgen kann. Das Verbindungselement kann Teil der Sitzschienenbaugruppe 10 oder Teil der Sitzbaugruppe sein, wobei die Sitzbaugruppe und die Sitzschienenbaugruppe 10 gemeinsam ein Sitzsystem bilden können.

Jedenfalls weist die Sitzschienenbaugruppe 10 eine Sitzschiene 20 zur Befestigung der Sitzbaugruppe auf, wobei das Befestigungsprofil 30 wiederum zur Aufnahme der Sitzschiene 20 in dem Aufnahmebereich 31 ausgebildet ist. Die Sitzschiene 20 weist die Sitzschienenkrone 21 auf bzw. wird durch diese gebildet. Die Sitzschienenkrone 21, das heißt der Bereich der Sitzschiene 20, der die Befestigungsaussparung 22 aufweist, ist in dem Aufnahmebereich 31 des Befestigungsprofils 30 derart angeordnet, dass der Wandabschnitt 32 des Befestigungsprofils 30 die Sitzschienenkrone 21 und damit die Befestigungsaussparung 22 zumindest teilweise umgibt. Der die Sitzschienenkrone 21 zumindest teilweise umgebende Wandabschnitt 32 kann durch einen Umformprozess bei einer Umformtemperatur hergestellt sein, wobei die obere Begrenzungswand 32a hergestellt wird, indem die in der Figur 3 dargestellten verlängerten Wände 32a gegenüber den seitlichen, vertikalen Begrenzungswänden 32c, 32d in Richtung (Pfeilrichtung) des Aufnahmebereichs 31 umgeklappt werden, so dass Kanten im Wandabschnitt 32 an den in Figur 3 dargestellten gestrichelten Linien entstehen (vgl. Figuren 4 und 5). Dies kann bei erhöhten Temperaturen stattfinden, bei denen das Kunststoffmaterial des Befestigungsprofils 30 bzw. des Wandabschnitts 32 erweicht ist. Ebenso kann dies dadurch erfolgen, indem der Wandabschnitt 32 in Form eines vorimprägnierten Halbzeugs vorliegt und anschließend in die in den Figuren 4 und 5 dargestellte Anordnung geformt wird und anschließend ausgehärtet wird.

Die Sitzschienenkrone 21 wird durch die beiden horizontalen Begrenzungswände 32a, 32b und eine vertikale Begrenzungswand 32c sowie eine weitere vertikale Begrenzungswand 32d des Wandabschnitts 32 eingefasst. Insbesondere ist jeweils eine Außenfläche der Sitzschienenkrone 21 einer der Begrenzungswände 32a, 32b, 32c und 32d zugewandt oder die Außenflächen liegen jeweils an den Begrenzungswänden 32a, 32b, 32c und 32d an. Der Aufnahmebereich 31 ist im Querschnitt im Wesentlichen rechteckig ausgebildet, um die Sitzschiene 20 so aufzunehmen, dass sie vollständig innerhalb des rechteckigen Aufnahmebereichs 31 angeordnet ist. Der Aufnahmebereich 31 wird dabei durch die beiden seitlichen Begrenzungswände 32c, 32d, die untere Begrenzungswand 32b und die obere Begrenzungswand 32a definiert.

Jedoch weist die obere Begrenzungswand 32a eine Öffnung 33 auf, so dass der Aufnahmebereich 31 in eine vertikale Richtung 11 geöffnet ist. Bei dem Befestigungsprofil 30 und auch bei der Sitzschiene 20 handelt es sich jeweils um ein langgestrecktes Profil, das sich in den Figuren 4 und 5 in die Zeichenebene hinein erstreckt. Somit ist die Öffnung 33 in einer dreidimensionalen Darstellung eine langgestreckte Öffnung 33.

Die Sitzschienenkrone 21 weist eine Aussparung 22 auf, die dazu ausgeführt ist, das Verbindungselement 40 (in den Figuren 4 und 5 durch gestrichelte Linien dargestellt) zum Befestigen der nicht dargestellten Sitzbaugruppe an der Sitzschienenbaugruppe 10 aufzunehmen. Dabei ist die Aussparung 22 der Sitzschienenkrone 21 in Form einer Vertiefung 23 in die vertikale Richtung 11 (siehe Figuren 4 und 5) ausgebildet, so dass die Aussparung 22 der Sitzschienenkrone 21 in Richtung der Öffnung 33 der oberen Begrenzungswand 32a des Aufnahmebereichs 31 zeigt, wenn die Sitzschiene 20 in den Aufnahmebereich 31 eingesetzt ist.

Die Figuren 4 und 5 zeigen jeweils Beispiele, in denen die Sitzschiene 20 in den Aufnahmebereich 31 eingesetzt ist. Das Verbindungselement 40 erstreckt sich damit durch die Öffnung 33 in der oberen, horizontalen Begrenzungswand 32a in die Aussparung 22 bzw. Vertiefung 23.

Die Figuren 4 und 5 stellen alternative Ausführungsformen dar, wobei die obige Beschreibung für beide Alternativen sinngemäß gilt. Jedoch unterscheidet sich das Beispiel der Figur 5 gegenüber dem Beispiel der Figur 4 dadurch, dass die Sitzschienenkrone 21 im Bereich der Aussparung 22 Vorsprünge 24a, 24b aufweist, welche sich in die vertikale Richtung 11 aus der oberen Außenfläche der Sitzschienenkrone 21 heraus erstrecken. Die Vorsprünge 24a, 24b schließen mit einem Rand der Öffnung 33 der oberen Begrenzungswand 32a des Aufnahmebereichs 31 ab, wenn die Sitzschienenkrone 21, wie in Figur 5 dargestellt, in den Aufnahmebereich 31 eingesetzt ist. "Abschließen" kann dabei bedeuten, dass ein Kontakt zwischen dem Verbindungselement 40 und dem faserverstärkten Kunststoff des Befestigungsprofils 30, insbesondere mit der oberen Begrenzungswand 32a des Befestigungsprofils 30 unterbunden ist. Das heißt mit anderen Worten, dass ungewollte Stöße zwischen der oberen Begrenzungswand 32a und dem Verbindungselement 40 vermieden werden können. Ebenso kann dadurch eine Kontaktkorrosion zwischen den Materialien vermieden werden. Somit dienen die Vorsprünge 24a, 24b in erster Linie dem Schutz des Wandabschnitts 32 des Befestigungsprofils 30, können jedoch auch eine noch bessere Befestigung der Sitzschiene 20 in dem Befestigungsprofil 30 bewirken.

Die in den Figuren 4 und 5 dargestellte Sitzschienenbaugruppe 10 kann im Bereich von Bodenplatten einer Fahrzeugbodenstruktur angeordnet sein. Diese Bodenplatten sind zwar in den Figuren nicht dargestellt, jedoch kann eine Bodenplatte mit Bezug zu den Figuren 4 und 5 so angeordnet sein, dass sich die seitliche Begrenzungswand 32c zwischen der Sitzschiene 20 und der Bodenplatte befindet. Ebenso kann eine weitere Bodenplatte so angeordnet sein, dass sich die seitliche Begrenzungswand 32d zwischen der Sitzschiene 20 und der Bodenplatte befindet, so dass sich bezüglich der vertikalen Richtung 11 eine spiegelsymmetrische Anordnung ergibt.

Fig. 6 zeigt ein Fahrzeug 100, insbesondere ein Luftfahrzeug 101 mit einer Sitzschienenbaugruppe 10, die in eine Bodenstruktur bzw. eine Bodengitterstruktur des Luftfahrzeugrumpfes integriert sein kann. Dabei kann die Sitzschienenbaugruppe 10 im Bereich von Bodenplatten oder zwischen Bodenplatten der Bodenstruktur angeordnet sein. Die Sitzschienenbaugruppe 10 kann damit zur lösbaren oder verschiebbaren Befestigung von Passagiersitzen im Luftfahrzeug 101 verwendet werden.

Fig. 7 zeigt ein Verfahren zur Herstellung einer Sitzschienenbaugruppe 10. In einem Schritt S1 des Verfahrens wird eine Sitzschiene 20 mit einer Sitzschienenkrone 21 bereitgestellt, wobei die Sitzschiene 20 ein metallisches Material aufweist. In einem weiteren Schritt S2 wird ein Befestigungsprofil 30 mit einem Aufnahmebereich 31 und einem Wandabschnitt 32 bereitgestellt, wobei das Befestigungsprofil 30 einen Kunststoff aufweist. In einem weiteren Schritt S3 wird die Sitzschiene 20 in den Aufnahmebereich 31 des Befestigungsprofils 30 eingesetzt. In einem weiteren Schritt S4 wird das Befestigungsprofil 30 zumindest teilweise auf eine Umformtemperatur S4 erwärmt. In einem weiteren Schritt S5 wird das Befestigungsprofil 30 umgeformt, sodass der Wandabschnitt 32 des Befestigungsprofils 30 die Sitzschienenkrone 21 der Sitzschiene 20 zumindest teilweise umgibt S5.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Sitzschienenbaugruppe (10) zur Befestigung einer Sitzbaugruppe in einem Fahrzeug (100),
aufweisend:
eine Sitzschiene (20) zur Befestigung der Sitzbaugruppe, wobei die Sitzschiene (20) ein metallisches Material aufweist;
ein Befestigungsprofil (30) zur Aufnahme der Sitzschiene (20), wobei das Befestigungsprofil (30) einen Kunststoff aufweist;
wobei das Befestigungsprofil (30) einen Aufnahmebereich (31) bildet, der dazu ausgeführt ist, die Sitzschiene (20) aufzunehmen;
wobei die Sitzschiene (20) eine Sitzschienenkrone (21) aufweist, welche in dem Aufnahmebereich (31) des Befestigungsprofils (30) derart angeordnet ist, dass ein Wandabschnitt (32) des Befestigungsprofils (30) die Sitzschienenkrone (21) zumindest teilweise umgibt;
wobei der Aufnahmebereich (31) durch zwei seitliche Begrenzungswände (32c, 32d), eine untere Begrenzungswand (32b) und eine obere Begrenzungswand (32a) definiert ist, und
wobei die obere Begrenzungswand (32a) eine Öffnung (33) aufweist, so dass der Aufnahmebereich (31) in eine vertikale Richtung (11) geöffnet ist.

2. Sitzschienenbaugruppe (10) nach Anspruch 1,
wobei der die Sitzschienenkrone (21) zumindest teilweise umgebende Wandabschnitt (32) durch einen Umformprozess bei einer Umformtemperatur hergestellt ist.

3. Sitzschienenbaugruppe (10) nach einem der vorhergehenden Ansprüche,
wobei das metallische Material der Sitzschiene (20) ein Titanwerkstoff ist.

4. Sitzschienenbaugruppe (10) nach einem der vorhergehenden Ansprüche,
wobei das Befestigungsprofil (30) einen faserverstärkten Kunststoff aufweist.

5. Sitzschienenbaugruppe (10) nach einem der vorhergehenden Ansprüche,
wobei die Sitzschienenkrone (21) durch mindestens zwei horizontale Begrenzungswände (32a, 32b) und zwei vertikale Begrenzungswände (32c, 32d) des Wandabschnitts (32) eingefasst ist.

6. Sitzschienenbaugruppe (10) nach einem der vorhergehenden Ansprüche,
wobei der Aufnahmebereich (31) im Wesentlichen quaderförmig ausgebildet ist und die Sitzschiene (20) derart angeordnet ist, dass sie vollständig innerhalb des quaderförmigen Aufnahmebereichs (31) angeordnet ist.

7. Sitzschienenbaugruppe (10) nach Anspruch 1,
wobei die Sitzschienenkrone (21) eine Aussparung (22) aufweist, die dazu ausgeführt ist, ein Verbindungselement (40) zum Befestigen einer Sitzbaugruppe an der Sitzschienenbaugruppe (10) aufzunehmen.

8. Sitzschienenbaugruppe (10) nach Anspruch 7,
wobei die Aussparung (22) der Sitzschienenkrone (21) in Form einer Vertiefung (23) in die vertikale Richtung (11) ausgebildet ist, so dass die Aussparung (22) der Sitzschienenkrone (21) in Richtung der Öffnung (33) der oberen Begrenzungswand (32a) des Aufnahmebereichs (31) zeigt, wenn die Sitzschiene (20) in den Aufnahmebereich (31) eingesetzt ist.

9. Sitzschienenbaugruppe (10) einem der Ansprüche 1 oder 7,
wobei die Sitzschienenkrone (21) im Bereich der Aussparung (22) Vorsprünge (24a, 24b) aufweist, welche sich in die vertikale Richtung (11) erstrecken, und
wobei die Vorsprünge (24a, 24b) mit einem Rand der Öffnung (33) der oberen Begrenzungswand (32a) des Aufnahmebereichs (31) abschließen, wenn die Sitzschiene (20) in den Aufnahmebereich (31) eingesetzt ist.

10. Verwendung einer Sitzschienenbaugruppe (10) nach einem der vorhergehenden Ansprüche in einem Luftfahrzeug (101).

11. Verfahren zur Herstellung einer Sitzschienenbaugruppe (10), aufweisend die Schritte:
Bereitstellen einer Sitzschiene (20) mit einer Sitzschienenkrone (21), wobei die Sitzschiene (20) ein metallisches Material aufweist (S1);
Bereitstellen eines Befestigungsprofils (30) mit einem Aufnahmebereich (31) und einem Wandabschnitt (32), wobei das Befestigungsprofil (30) einen Kunststoff aufweist (S2);
Einsetzen der Sitzschiene (20) in den Aufnahmebereich (31) des Befestigungsprofils (30, S3);
Erwärmen des Befestigungsprofils (30) auf eine Umformtemperatur (S4);
Umformen des Befestigungsprofils (30), sodass der Wandabschnitt (32) des Befestigungsprofils (30) die Sitzschienenkrone (21) der Sitzschiene (20) zumindest teilweise umgibt (S5);
wobei der Aufnahmebereich (31) durch zwei seitliche Begrenzungswände (32c, 32d), eine untere Begrenzungswand (32b) und eine obere Begrenzungswand (32a) definiert ist, und
wobei die obere Begrenzungswand (32a) eine Öffnung (33) aufweist, so dass der Aufnahmebereich (31) in eine vertikale Richtung (11) geöffnet ist.

## Claims

1. Seat rail assembly (10) for fastening a seat assembly in a vehicle (100),
having:
a seat rail (20) for fastening the seat assembly, wherein the seat rail (20) has a metallic material;
a fastening profile (30) for receiving the seat rail (20), wherein the fastening profile (30) has a plastic;
wherein the fastening profile (30) forms a receiving region (31), which is designed to receive the seat rail (20) ;
wherein the seat rail (20) has a seat rail crown (21), which is arranged in the receiving region (31) of the fastening profile (30) in such a way that a wall section (32) of the fastening profile (30) at least partially surrounds the seat rail crown (21);
wherein the receiving region (31) is defined by two lateral boundary walls (32c, 32d), a lower boundary wall (32b) and an upper boundary wall (32a), and
wherein the upper boundary wall (32a) has an opening (33), such that the receiving region (31) is open in a vertical direction (11).

2. Seat rail assembly (10) according to Claim 1, wherein the wall section (32) at least partially surrounding the seat rail crown (21) is produced by a forming process at a forming temperature.

3. Seat rail assembly (10) according to one of the preceding claims,
wherein the metallic material of the seat rail (20) is a titanium material.

4. Seat rail assembly (10) according to one of the preceding claims,
wherein the fastening profile (30) has a fibre-reinforced plastic.

5. Seat rail assembly (10) according to one of the preceding claims,
wherein the seat rail crown (21) is enclosed by at least two horizontal boundary walls (32a, 32b) and two vertical boundary walls (32c, 32d) of the wall section (32) .

6. Seat rail assembly (10) according to one of the preceding claims,
wherein the receiving region (31) is of substantially cuboidal design, and the seat rail (20) is arranged in such a way that it is arranged completely within the cuboidal receiving region (31).

7. Seat rail assembly (10) according to Claim 1, wherein the seat rail crown (21) has a recess (22), which is designed to receive a connecting element (40) for fastening a seat assembly on the seat rail assembly (10).

8. Seat rail assembly (10) according to Claim 7, wherein the recess (22) of the seat rail crown (21) is designed in the form of a depression (23) in the vertical direction (11), such that the recess (22) of the seat rail crown (21) faces in the direction of the opening (33) in the upper boundary wall (32a) of the receiving region (31) when the seat rail (20) is inserted into the receiving region (31).

9. Seat rail assembly (10) according to either of Claims 1 and 7,
wherein the seat rail crown (21) has projections (24a, 24b) in the region of the recess (22), which projections extend in the vertical direction (11), and
wherein the projections (24a, 24b) end at an edge of the opening (33) in the upper boundary wall (32a) of the receiving region (31) when the seat rail (20) is inserted into the receiving region (31).

10. Use of a seat rail assembly (10) according to one of the preceding claims in an aircraft (101).

11. Method for producing a seat rail assembly (10), having the following steps:
making available a seat rail (20) having a seat rail crown (21), wherein the seat rail (20) has a metallic material (S1);
making available a fastening profile (30) having a receiving region (31) and a wall section (32), wherein the fastening profile (30) has a plastic (S2);
inserting the seat rail (20) into the receiving region (31) of the fastening profile (30, S3);
heating the fastening profile (30) to a forming temperature (S4);
forming the fastening profile (30), such that the wall section (32) of the fastening profile (30) at least partially surrounds (S5) the seat rail crown (21) of the seat rail (20);
wherein the receiving region (31) is defined by two lateral boundary walls (32c, 32d), a lower boundary wall (32b) and an upper boundary wall (32a), and
wherein the upper boundary wall (32a) has an opening (33), such that the receiving region (31) is open in a vertical direction (11).

## Revendications

1. Ensemble de rail de siège (10) pour fixer un ensemble de siège dans un véhicule (100),
présentant :
un rail de siège (20) pour fixer l'ensemble de siège, le rail de siège (20) présentant un matériau métallique ;
un profilé de fixation (30) pour recevoir le rail de siège (20), le profilé de fixation (30) présentant une matière plastique ;
dans lequel le profilé de fixation (30) forme une zone de réception (31) conçue pour recevoir le rail de siège (20) ;
dans lequel le rail de siège (20) présente une couronne de rail de siège (21) qui est agencée dans la zone de réception (31) du profilé de fixation (30) de telle sorte qu'une section de paroi (32) du profilé de fixation (30) entoure au moins partiellement la couronne de rail de siège (21) ;
dans lequel la zone de réception (31) est définie par deux parois de délimitation latérales (32c, 32d), une paroi de délimitation inférieure (32b) et une paroi de délimitation supérieure (32a), et
dans lequel la paroi de délimitation supérieure (32a) présente une ouverture (33) de telle sorte que la zone de réception (31) est ouverte dans une direction verticale (11).

2. Ensemble de rail de siège (10) selon la revendication 1,
dans lequel la section de paroi (32) entourant au moins partiellement la couronne de rail de siège (21) est fabriquée par un processus de formage à une température de formage.

3. Ensemble de rail de siège (10) selon l'une quelconque des revendications précédentes,
dans lequel le matériau métallique du rail de siège (20) est un matériau en titane.

4. Ensemble de rail de siège (10) selon l'une quelconque des revendications précédentes,
dans lequel le profilé de fixation (30) présente une matière plastique renforcée par des fibres.

5. Ensemble de rail de siège (10) selon l'une quelconque des revendications précédentes,
dans lequel la couronne de rail de siège (21) est entourée par au moins deux parois de délimitation horizontales (32a, 32b) et deux parois de délimitation verticales (32c, 32d) de la section de paroi (32).

6. Ensemble de rail de siège (10) selon l'une quelconque des revendications précédentes,
dans lequel la zone de réception (31) est réalisée sous forme essentiellement parallélépipédique et le rail de siège (20) est agencé de telle sorte qu'il est entièrement agencé à l'intérieur de la zone de réception parallélépipédique (31).

7. Ensemble de rail de siège (10) selon la revendication 1,
dans lequel la couronne de rail de siège (21) présente un évidement (22) conçu pour recevoir un élément de liaison (40) pour fixer un ensemble de siège à l'ensemble de rail de siège (10).

8. Ensemble de rail de siège (10) selon la revendication 7,
dans lequel l'évidement (22) de la couronne de rail de siège (21) est réalisé sous la forme d'un renfoncement (23) dans la direction verticale (11), de telle sorte que l'évidement (22) de la couronne de rail de siège (21) est orienté en direction de l'ouverture (33) de la paroi de délimitation supérieure (32a) de la zone de réception (31) lorsque le rail de siège (20) est inséré dans la zone de réception (31).

9. Ensemble de rail de siège (10) selon l'une quelconque des revendications 1 ou 7,
dans lequel la couronne de rail de siège (21) présente, dans la zone de l'évidement (22), des saillies (24a, 24b) qui s'étendent dans la direction verticale (11), et
dans lequel les saillies (24a, 24b) se terminent par un bord de l'ouverture (33) de la paroi de délimitation supérieure (32a) de la zone de réception (31) lorsque le rail de siège (20) est inséré dans la zone de réception (31) .

10. Utilisation d'un ensemble de rail de siège (10) selon l'une quelconque des revendications précédentes dans un aéronef (101).

11. Procédé de fabrication d'un ensemble de rail de siège (10), présentant les étapes suivantes :
la fourniture d'un rail de siège (20) avec une couronne de rail de siège (21), le rail de siège (20) présentant un matériau métallique (S1) ;
la fourniture d'un profilé de fixation (30) ayant une zone de réception (31) et une section de paroi (32), le profilé de fixation (30) présentant une matière plastique (S2) ;
l'insertion du rail de siège (20) dans la zone de réception (31) du profilé de fixation (30, S3) ;
le chauffage du profilé de fixation (30) à une température de formage (S4) ;
le formage du profilé de fixation (30) de telle sorte que la section de paroi (32) du profilé de fixation (30) entoure au moins partiellement (S5) la couronne de rail de siège (21) du rail de siège (20) ;
dans lequel la zone de réception (31) est définie par deux parois de délimitation latérales (32c, 32d), une paroi de délimitation inférieure (32b) et une paroi de délimitation supérieure (32a), et
dans lequel la paroi de délimitation supérieure (32a) présente une ouverture (33) de telle sorte que la zone de réception (31) est ouverte dans une direction verticale (11).
